# FASCICULE DE BREVET EUROPEEN

(11) **EP 2 356 027 B1**
(45) Date de publication et mention de la délivrance du brevet: **02.07.2014**
(21) Numéro de dépôt: 09801471.5
(22) Date de dépôt: 02.12.2009
(51) Int. Cl.: B64D 27/26

(54) **SYSTÈME DE FIXATION ENTRE DEUX COMPOSANTS, TELS QU'UN MOTEUR D'AÉRONEF ET SON MÂT D'ACCROCHAGE**
SYSTEM ZUR ANKOPPLUNG VON ZWEI KOMPONENTEN WIE EIN TRIEBWERK UND EIN PYLON
SYSTEM FOR JOINING TWO COMPONENTS LIKE AN AIRCRAFT ENGINE AND AN AIRCRAFT PYLON

(30) Priorité: 08.12.2008 FR 0806867
(43) Date de publication de la demande: 17.08.2011
(73) Titulaire: Airbus Opérations SAS, 31060 Toulouse (FR)
(72) Inventeur: BONNET, Mathieu, Toulouse 31000 (FR); RENAUD, Eric, F-31480 Brignemont (FR)
(74) Mandataire: Hauer, Bernard
(86) Numéro de dépôt international: PCT/FR2009/052364
(87) Numéro de publication internationale: WO 2010/066985

(56) Documents cités:
- EP-A- 0 311 155
- US-A- 4 044 973
- US-A- 4 140 028
- US-A- 5 028 001

## Description

La présente invention concerne un système de fixation entre deux composants, tels que notamment un moteur d'un aéronef et un mât d'accrochage du moteur solidaire de la structure (aile ou fuselage) de l'aéronef, et dont le but est de traiter au moins partiellement voire totalement les phénomènes vibratoires engendrés par le fonctionnement des moteurs.

Comme montré par le document US 4 044 973, les jonctions entre le ou les moteurs et les mâts d'accrochage sont réalisées par des systèmes de fixation du type à attaches avant et arrière entre autres agencées selon l'axe longitudinal du moteur et contenues dans des plans perpendiculaires audit axe longitudinal.

Dans les avions de ligne équipés de turboréacteurs, les attaches des systèmes de fixation sont rigides en reprenant les efforts et couple issus des moteurs. Aussi, avec de telles attaches, les vibrations engendrées par ces derniers se propagent jusqu'au fuselage à l'intérieur duquel se trouvent l'équipage et les passagers. Cependant, grâce à l'élasticité inhérente aux ailes, les vibrations sont en grande partie filtrées de sorte que le ressenti des vibrations par les passagers et l'équipage est faible et, donc, acceptable. Néanmoins, ces vibrations existent et peuvent à la longue entraîner une fatigue structurelle de certaines pièces et s'amplifier surtout à des gammes de fréquences particulières et devenir gênantes pour les passagers et membres d'équipage.

Si les problèmes vibratoires sur les avions à turboréacteurs sont moins sensibles, quoique présents, en revanche, sur les avions équipés de turbopropulseurs, les vibrations sont amplifiées en particulier aux basses fréquences d'autant plus que, dans certains modèles d'avions, les turbopropulseurs sont montés directement dans les ailes.

Pour pallier ces phénomènes vibratoires, les attaches des systèmes de fixation utilisent des élastomères de sorte que celles-ci sont moins rigides mais ont un amortissement plus important que des attaches rigides, ce qui permet une filtration partielle des vibrations, mais néanmoins insuffisante notamment en basse fréquence. En effet, ces attaches "souples" sont soumises à de fortes charges statiques qui impliquent une rigidité importante, afin de limiter les déplacements et les phénomènes de "flutter". Une rigidité importante entraîne directement une fréquence de résonance élevée (dépendant de la masse également).

On peut également prévoir des amortisseurs sur les systèmes de fixation entre le moteur et la structure. Cependant, leur utilisation ne permet pas d'agir sur les modes vibratoires mais d'atténuer leurs effets. Pour être efficace, un amortisseur a besoin d'un minimum de vitesse de déplacement. Les vibrations actuelles ne permettent pas ce genre d'implantation.

Par exemple, on connaît par le brevet US 5028001 un système de fixation d'un moteur d'aéronef à un mât d'accrochage, comportant des attaches avant et des attaches arrière, au moins deux des attaches avant ou arrière sont à amortissement vibratoire.

La présente invention a pour but de remédier à ces inconvénients et concerne un système de fixation entre deux composants tels qu'un moteur d'aéronef à son mât d'accrochage, dont la conception permet de s'opposer efficacement à la transmission des vibrations et des efforts associés du moteur vers la structure de l'aéronef, de filtrer les efforts issus du moteur qu'il soit du type turbopropulseur, turboréacteur ou autre, pour réduire les niveaux vibratoires vers la structure de l'aéronef, et de ne pas nuire à cette dernière ni au confort des passagers et membres d'équipage.

A cet effet, l'invention résout le problème technique au moyen d'un ensemble constitué par un mât d'accrochage, un moteur d'aéronef et un système de fixation selon la revendication 1.

L'ensemble est caractérisé:
- en ce que chaque attache à amortissement vibratoire comprend :
   ■ un ensemble de suspension à élément élastique et à masse résonante, qui est relié audit mât autour d'un axe d'articulation parallèle à l'axe X (X étant l'axe longitudinal du moteur) et dont une extrémité est libre et porte ladite masse, tandis que l'autre extrémité est associée audit élément élastique lié audit mât ; et
   ■ au moins une manille dont une extrémité est fixée audit moteur et dont l'autre extrémité est reliée audit ensemble de suspension correspondant.

Ainsi, grâce à l'invention, les vibrations et les efforts associés issus du fonctionnement du moteur et transmis par les manilles aux ensembles de suspension sont repris par les éléments élastiques dont la déformation provoque la rotation des ensembles de suspension et l'entraînement des masses résonantes associées situées à l'opposé des éléments élastiques. A une fréquence d'excitation définie, les ensembles à masses qui font office de résonateurs, entrent en anti-résonance en contrecarrant les phénomènes vibratoires.

En conséquence, contrairement aux systèmes rigides laissant passer les vibrations ou aux systèmes à élastomères absorbant certaines vibrations, le système de l'invention filtre les efforts et la totalité des vibrations engendrées par les ensembles de suspension à résonateur intégré produisant une fréquence opposée à celle des éléments élastiques, tout en assurant la rigidité de fixation du moteur sur le mât.

Selon un mode préféré de réalisation, les deux manilles desdites attaches sont disposées approximativement selon des directions parallèles à l'axe Y et symétriquement par rapport à l'axe X et une troisième attache rigide est prévue entre ledit mât et ledit moteur et comporte une manille articulée à ceux-ci et disposée approximativement selon une direction parallèle à l'axe Z.

Ainsi, les efforts selon Y et le couple autour de X sont repris par les manilles des ensembles, tandis que les efforts selon Z sont repris par la manille de la troisième attache.

De préférence, les trois dites attaches sont des attaches avant dudit moteur sur ledit mât. Cependant, les trois dites attaches pourraient être des attaches arrière dudit moteur sur ledit mât.

Avantageusement, chaque ensemble de suspension peut se présenter sous la forme d'un bras arqué selon la périphérie dudit moteur et qui porte, à ses extrémités, ledit élément élastique et ladite masse résonante, tandis que ledit axe d'articulation dudit bras audit mât se trouve proche dudit élément élastique. Ainsi, la masse est éloignée au maximum de l'élément élastique et à une fréquence d'excitation définie, le bras et la masse de chaque ensemble forment alors un résonateur sensible et efficace qui entre en anti-résonance, protégeant ainsi la structure de l'avion des vibrations.

Pour augmenter la distance entre l'élément élastique et la masse de chaque bras et limiter ainsi le poids de celle-ci, le bras arqué de chaque ensemble peut s'étendre autour dudit moteur sur près de la moitié de sa périphérie et s'amincir en direction de son extrémité libre.

Par ailleurs, lesdits axes d'articulation parallèles entre lesdits ensembles et ledit mât, lesdites manilles et ledit moteur, et lesdites manilles et lesdits ensembles sont munis de paliers souples en élastomère ou analogue. Un tel agencement ne crée pas de frottement entre les différentes liaisons de sorte que les vibrations peuvent passer "librement" pour être absorbées par les ensembles de suspension du système de fixation.

Dans un mode préféré de réalisation, ledit élément élastique de chaque ensemble de suspension est constitué d'au moins un ressort rapporté sur ledit mât et sur ledit ensemble par des plaques de support respectives disposées latéralement le long dudit ressort et intégrant des portions de spires correspondantes de celui-ci.

Quant à ladite masse résonante, elle peut se présenter sous la forme d'un galet massique monté sur un axe en bout de ladite extrémité libre de chaque ensemble. On remarque la simplicité et la fiabilité de réalisation de l'élément élastique et de la masse résonante.

Aussi, compte tenu de la dimension diamétrale importante du moteur et de la disposition des manilles dans des directions Y pour la reprise des efforts selon celles-ci, on prévoit des biellettes de renvoi respectives articulées auxdites manilles et auxdits ensembles de suspension.

Selon une autre caractéristique du système de fixation, une troisième attache à amortissement vibratoire, identique aux deux autres attaches, peut être prévue entre ledit mât et ledit moteur, de manière que les trois dites attaches soient réparties autour dudit moteur en étant reliées d'une part à ce dernier et, d'autre part, à un arceau circulaire entourant ledit moteur et fixé audit mât.

Ainsi, les efforts selon les directions Y et Z et le couple autour de la direction X sont repris par les trois attaches qui peuvent être des attaches avant et arrière.

Les figures du dessin annexé feront bien comprendre comment l'invention peut être réalisée. Sur ces figures, des références identiques désignent des éléments semblables.
La figure 1 représente une vue en perspective partielle d'un moteur d'aéronef monté sur un mât d'accrochage par l'intermédiaire d'un système de fixation conforme à l'invention.
La figure 2 est une vue de face dudit système de fixation de la figure 1, associant le mât audit moteur.
La figure 3 est une vue en perspective partielle dudit système de fixation représenté sur la figure 2.
La figure 4 est une vue en coupe de l'une desdites attaches passant par les axes d'articulation de l'ensemble de suspension et de la manille de ladite attache.
La figure 5 montre un autre mode de réalisation particulier dudit système de fixation.

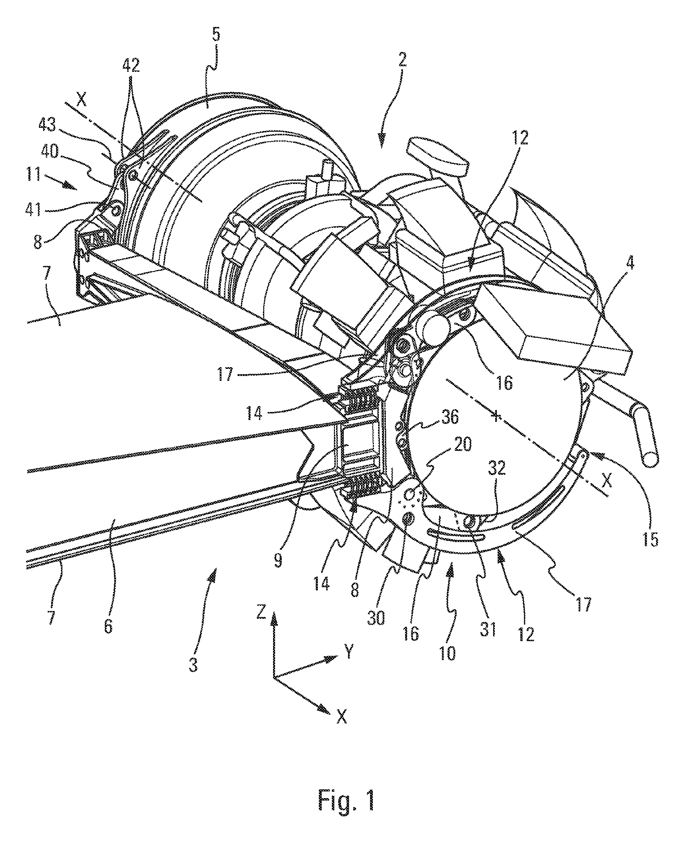

Le système de fixation 1, selon l'invention, montré sur les figures 1 à 5, assure la liaison entre le moteur 2 et le mât d'accrochage 3 d'un avion. Le moteur 2 notamment représenté sur la figure 1 peut être un turbopropulseur ou un turboréacteur dont on peut voir en particulier les corps cylindriques respectivement avant 4 du compresseur et arrière 5 de la tuyère et qui est porté, au moyen du système de fixation 1, par le mât d'accrochage 3 lui-même solidaire de la structure, non représentée, de l'avion.

Cette structure peut être l'aile ou le fuselage de l'avion, et dans la configuration illustrée sur la figure 1, le mât d'accrochage 3 est disposé sensiblement dans le plan horizontal XY d'un repère orthonormé de référence XYZ correspondant aux axes de roulis X, de tangage Y et de lacet Z de l'avion, et est issu du côté arrière gauche du fuselage. Toute autre configuration du mât d'accrochage par rapport à l'avion est bien entendu possible.

Le mât d'accrochage 3 comprend, de façon usuelle et succincte, un caisson structurel 6 recouvert de peaux appropriées 7 et terminé au bout par une poutre rigide 8 selon X à longerons et nervures transversales 9. Sur cette poutre rigide 8 est monté le moteur 2 d'axe longitudinal X par le système de fixation 1.

Ce dernier se compose, de manière connue, d'attaches avant 10 reliant le corps 4 du compresseur du moteur 2 à l'avant de la poutre 8 du mât 3 et contenues dans un plan YZ, d'attaches arrière 11 reliant le corps de la tuyère à l'arrière de la poutre 8 du mât et contenues également dans un plan YZ, et de bielles de poussée non représentées, reliant le moteur au mât et agencées sensiblement dans des directions parallèles à X.

Ainsi disposées, les attaches avant 10 du système de fixation 1 reprennent, comme on le verra plus tard, les efforts issus du moteur selon les axes Y et Z ainsi que le couple autour de l'axe X, les attaches arrière 11 reprenant aussi les efforts selon les axes Y et Z, tandis que les bielles de poussée reprennent les efforts selon l'axe X.

Conformément à l'invention et dans cet exemple de réalisation, deux des attaches avant 10 du système de fixation 1 sont à amortissement vibratoire, c'est-à-dire qu'elles ont pour but, outre d'assurer la fixation proprement dite, de filtrer les efforts transmis par le fonctionnement du moteur 2 et de réduire ainsi les niveaux vibratoires dans l'avion. On voit, sur les figures 1 à 3, que ces deux attaches 10 sont identiques et agencées symétriquement, dans le plan YZ perpendiculairement à l'axe X, respectivement de part et d'autre de la poutre 8 du mât 3.

Structurellement, chaque attache à amortissement vibratoire comprend un ensemble de suspension 12 lié au mât et ayant un élément élastique 14 et une masse battante résonante 15, et une manille ou bielle 16 disposée entre le moteur 2 et l'ensemble de suspension 12. En particulier, chaque ensemble de suspension 12 se présente sous la forme d'un bras ou branche arqué 17 dont l'extension suit sensiblement le contour du moteur et qui est articulé, au voisinage d'une première 18 de ses extrémités, à une oreille latérale 19 de la poutre 8 autour d'un axe 20 parallèle à l'axe Z. Cette première extrémité 18 est liée à la poutre 8 par l'élément élastique 14 décrit ultérieurement, tandis que la seconde extrémité 21 de chaque bras 17 est libre et porte la masse résonante 15.

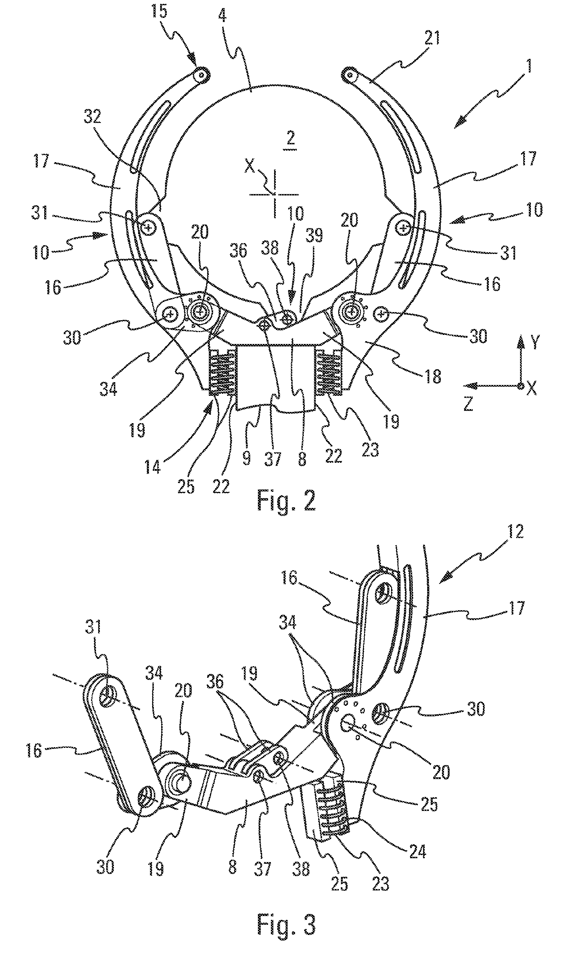

On voit notamment sur les figures 1 et 2, que les deux bras arqués 17 s'étendent à partir desdites oreilles latérales 19 du mât, symétriquement, autour de la périphérie du corps 4 du compresseur sur pratiquement la totalité de celle-ci, et que les axes d'articulation 20 sont proches des premières extrémités 18 des bras. Les éléments élastiques 14, reliant ces dernières à une nervure transversale 9 associant la poutre 8 au caisson 6 du mât, sont définis par des ressorts hélicoïdaux 23 dont les côtés latéraux des spires 24 sont intégrés dans des plaquettes de support 25 rapportées fixement et respectivement sur les premières extrémités 18 des bras et sur les côtés latéraux 22 de la nervure transversale 9, comme le montrent les figures 1 à 3. Ces ressorts 23 assurent la reprise des différents efforts issus des manilles comme on le verra ultérieurement.

Les secondes extrémités libres 21 des bras portent, quant à elles, des galets massiques 26 autour d'axes 27. Comme chaque bras 17 entoure presque la moitié de la périphérie externe du moteur, la longueur du bras de levier créé entre l'articulation 20 du bras à la poutre et sa seconde extrémité libre 21 est importante, de sorte que le galet 26 peut avoir une masse relativement faible n'alourdissant pas exagérément celle de chaque ensemble 12. Ces masses vibrantes, suite à la déformation des ressorts, entreront en anti-résonance, s'opposant aux ressorts.

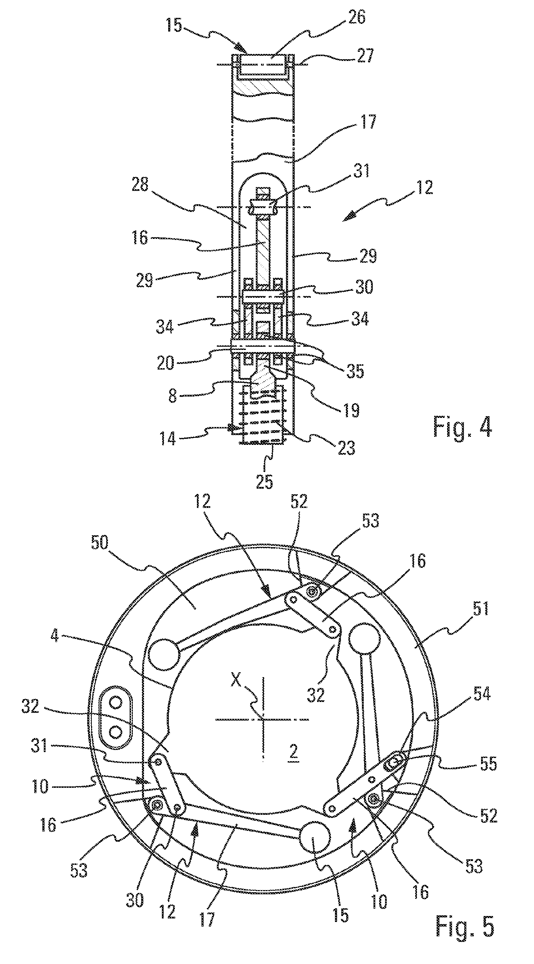

On remarque aussi sur les figures 3 et 4, que chaque bras 17 présente, dans sa partie inférieure tournée vers le moteur et proche de la première extrémité 18, une partie évidée 28 formant une section transversale en U entre les ailes latérales 29 de laquelle s'engage l'oreille latérale correspondante 19 autour de l'axe d'articulation 20 du bras à la poutre 8.

Dans cet évidement 28 de chaque bras est prévue une extrémité de la manille 16 reliant le moteur 2 à l'élément de suspension 12 et montée autour d'un axe d'articulation 30 parallèle à X et, donc, à l'axe d'articulation 20 et proche de ce dernier. L'autre extrémité de chaque manille est articulée également autour d'un axe 31 à une patte d'ancrage 32 du moteur, l'axe 31 étant parallèle aux autres axes d'articulation 20 et 30. On remarque, par ailleurs, que la position des axes 30, 31 est telle que les manilles 16 issues des pattes d'ancrage symétriques du moteur se trouvent sensiblement parallèles à l'axe Y du repère de manière à reprendre au mieux les efforts selon cet axe. Du fait de cette disposition inhérente à la grande dimension des moteurs, on prévoit entre la manille 16 et le bras arqué 17 de chaque ensemble de suspension, deux biellettes identiques de renvoi 34 qui sont disposées, d'un côté, de part et d'autre de l'extrémité de la manille autour de l'axe 30 et, de l'autre côté, de part et d'autre de l'oreille latérale 19, autour de l'axe d'articulation 20. La liaison entre les biellettes de renvoi 34 et les manilles 16 est libre en rotation, tandis que celle entre les biellettes de renvoi 34 et les bras 17 est solidaire en rotation.

On doit noter que, entre les axes d'articulation 20, 30, 31 et les composants respectifs tels que les bras 17, les oreilles latérales 19, les manilles 16 et les biellettes 34, sont prévus des bagues en élastomère 35 qui évitent les frottements dans les liaisons (articulations) pour laisser passer les efforts et vibrations de manière à ce qu'ils soient repris par les ensembles de suspension 12 à ressort élastique et masse résonante.

Pour reprendre les efforts selon la direction de l'axe Z, le système de fixation 1 comprend, comme le montrent notamment les figures 2 et 3, une troisième attache avant 10 constituée de deux manilles parallèles et identiques 36 qui sont montées de manière articulée et rigide autour d'un même axe 37 sur la poutre 8 du mât et autour d'un même axe 38 sur une patte d'ancrage 39 du corps 4 du compresseur, si bien que la direction générale des deux manilles 36 se trouve sensiblement dans l'axe Z du repère.

En ce qui concerne les deux attaches arrière 11 du système de fixation 1, dont l'une est visible sur la figure 1, chacune d'elles comprend une manille 40 qui est montée, à l'une de ses extrémités, autour d'un axe 41 et, à l'autre extrémité, entre deux ferrures parallèles 42 du corps 4 de la tuyère par le biais d'un axe d'articulation symbolisé en 43. Sur la figure 1, on voit que cette extrémité de la manille 40 n'est pas encore solidaire des ferrures 42. Les deux manilles 40 ainsi montées fixent l'arrière du moteur 2 au mât 3 et reprennent, de par leur disposition de montage symétrique par rapport à l'axe X, les efforts selon les directions des axes Y et Z.

Le système de fixation 1 avec, dans cet exemple de réalisation, deux de ses attaches avant à amortissement vibratoire agit de la façon suivante.

Lors du fonctionnement du moteur durant le vol de l'avion, les efforts engendrés sont transmis par les manilles 16 du système de fixation 1 aux deux ensembles de suspension symétriques 12 par l'intermédiaire des biellettes 34 liées, d'un côté, aux manilles autour des axes 30 et, de l'autre côté, aux bras arqués 17 autour des axes 20. Ces bras transmettent les efforts aux ressorts 23 qui viennent s'appuyer ou se tendre sur la nervure transversale 9 du caisson 6. Ainsi, les efforts provenant des manilles 16 sont repris et filtrés par les ressorts 23. Aussi, leur déformation alternée provoque une rotation des bras arqués 17 autour des axes 20, ce qui a pour conséquence, l'entraînement des galets massiques 26 situés, en opposition des ressorts, aux extrémités libres 21 des bras.

A une fréquence d'excitation définie, chaque bras arqué 17 et son galet 26 entrent en anti-résonance par rapport au ressort associé, et isolent ainsi le moteur 2 du mât 3. Les vibrations sont ainsi absorbées par les ensembles de suspension 12 du système de fixation 1 et ne se propagent pas vers la structure de l'avion.

Un autre mode de réalisation du système de fixation 1 conforme à l'invention est représenté schématiquement sur la figure 5. Au lieu de deux attaches avant à amortissement vibratoire, ce système comporte trois attaches avant 10 qui sont disposées dans un espace annulaire 50 prévu, entre le corps 4 du compresseur du moteur 2 et un arceau cylindrique de support 51, coaxial à l'axe X et solidaire du mât d'accrochage 3 non illustré sur la figure 5. De la sorte, les trois attaches à amortissement vibratoire 10 reprennent non seulement le couple autour de l'axe X et les efforts selon l'axe Y, mais également ceux selon l'axe Z en lieu et place des manilles rigides 36 du mode de réalisation précédent.

En particulier, chaque attache 10 comprend une manille 16 articulée, d'une part, autour d'un axe 31 à une patte de fixation 32 du corps du compresseur et, d'autre part, à un bras 17 sensiblement rectiligne dans cet exemple, de l'ensemble de suspension correspondant 12. Chaque bras 17, comme dans la réalisation précédente, est par ailleurs relié, à l'une de ses extrémités, à une patte de fixation 52 de l'arceau 51 par le biais de l'élément élastique 14 qui, dans ce mode de réalisation, est un tube de torsion 53 et porte, à son autre extrémité libre, la masse battante résonante 15 qui est dans ce cas sphérique.

De la même façon que précédemment, ce système de fixation 1 reprend et filtre respectivement les efforts et les vibrations issus du moteur 2 par l'intermédiaire des manilles 16 directement (les biellettes n'étant pas nécessaires dans ce mode de réalisation), des tubes de torsion déformables 53 et des masses sphériques résonantes 15 des bras mobiles 17.

On voit, par ailleurs, sur la figure 5, que l'une des manilles 16 d'une attache se prolonge jusqu'à venir s'articuler par l'intermédiaire d'un trou oblong 54 autour d'un axe 55 à une patte d'ancrage 52 de l'arceau. Cet agencement constitue une sécurité permettant de limiter la charge transmise par le moteur sur le système antivibratoire à 1 g par exemple.

Ce système 1 à arceau 51 pourrait s'intégrer aussi au niveau des attaches arrière 11.

De plus, les tubes de torsion 53 pourraient être remplacées par des lames en flexion sans sortir de l'invention. Par exemple, chaque lame est reliée à ses extrémités à des pattes d'ancrage de l'arceau et comprend sur celle-ci un élément allongé à masse battante libre contrecarrant les vibrations engendrées par la lame articulée à la manille correspondante issue du moteur. Ce mode de réalisation du système présenté avec des éléments élastiques à tubes de torsion ou à lames de flexion pourrait intégrer à la place celui décrit précédemment avec des éléments élastiques à ressorts.

## Revendications

1. Ensemble constitué d'un moteur d'aéronef (2), d'un mât (3) d'accrochage à une structure de l'aéronef et d'un système de fixation (1) dudit moteur audit mât, ledit système de fixation comportant notamment des attaches avant (10) et des attaches arrière (11) par rapport à l'axe longitudinal X dudit moteur selon un repère orthonormé XYZ, et contenues dans des plans YZ perpendiculaires audit axe X, au moins deux dites attaches avant (10) ou arrière (11) étant du type à amortissement vibratoire, les deux dites attaches étant identiques et disposées de part et d'autre dudit mât et dudit moteur ; **caractérisé**
- **en ce que** chaque attache à amortissement vibratoire comprend :
■ un ensemble de suspension (12) à élément élastique (14) et à masse résonante (15), qui est relié audit mât autour d'un axe d'articulation (20) parallèle à l'axe X et dont une extrémité (21) est libre et porte ladite masse, tandis que l'autre extrémité (18) est associée audit élément élastique (14) lié audit mât ; et
■ au moins une manille (16) dont une extrémité est fixée audit moteur (2) et dont l'autre extrémité est reliée audit ensemble de suspension correspondant (12).

2. Ensemble selon la revendication 1,
**caractérisé en ce que** les deux manilles (16) desdites attaches sont disposées approximativement selon des directions parallèles à l'axe Y et symétriquement par rapport à l'axe X et **en ce qu'**une troisième attache rigide (10, 11) est prévue entre ledit mât (3) et ledit moteur (2) et comporte une manille (36) articulée à ceux-ci et disposée approximativement selon une direction parallèle à l'axe Z.

3. Ensemble selon la revendication 2,
**caractérisé en ce que** les trois dites attaches sont des attaches avant (10) dudit moteur sur ledit mât.

4. Ensemble selon la revendication 2,
**caractérisé en ce que** les trois dites attaches sont des attaches arrière (11) dudit moteur sur ledit mât.

5. Ensemble selon l'une quelconque des revendications 1 à 4,
**caractérisé en ce que** chaque ensemble de suspension (12) se présente sous la forme d'un bras arqué (17) selon la périphérie dudit moteur et qui porte, à ses extrémités, ledit élément élastique (14) et ladite masse résonante (15), tandis que ledit axe d'articulation (20) dudit bras audit mât est situé du coté dudit élément élastique.

6. Ensemble selon l'une quelconque des revendications 1 à 5,
**caractérisé en ce que** lesdites manilles (16) sont reliées audit moteur et auxdits ensembles par des axes d'articulation (30,31), ces derniers et l'axe d'articulation (20) de chaque ensemble (12) audit mât (3) étant parallèles, et lesdites manilles et lesdits ensembles (12) sont munis de paliers souples (35) en élastomère ou analogue.

7. Ensemble selon l'une quelconque des revendications 1 à 6,
**caractérisé en ce que** ledit élément élastique (14) de chaque ensemble de suspension (12) est constitué d'au moins un ressort (23) rapporté sur ledit mât et sur ledit ensemble par des plaquettes de support respectives (25) disposées latéralement le long dudit ressort et intégrant des portions de spires correspondantes (24) de celui-ci.

8. Ensemble selon l'une quelconque des revendications 1 à 7,
**caractérisé en ce que** ladite masse résonante (15) se présente sous la forme d'un galet massique (26) monté sur un axe (27) en bout de ladite extrémité libre (21) de chaque ensemble.

9. Ensemble selon l'une quelconque des revendications 1 à 8,
**caractérisé en ce que**, entre les deux manilles desdites attaches à amortissement vibratoire et lesdits ensembles de suspension, sont prévues des biellettes de renvoi respectives (34) articulées auxdites manilles et ensembles de suspension.

10. Ensemble selon l'une des revendications 1 - 2,
**caractérisé en ce qu'**une troisième attache (10) à amortissement vibratoire identique aux deux autres attaches, est prévue entre ledit mât (3) et ledit moteur (2) de manière que les trois dites attaches soient réparties autour dudit moteur en étant reliées d'une part à ce dernier et, d'autre part, à un arceau circulaire (51) entourant ledit moteur et fixé audit mât.

## Patentansprüche

1. Einheit, bestehend aus einem Luftfahrzeugmotor (2), einem Pylon (3) zur Ankopplung an eine Struktur des Luftfahrzeugs und aus einem System (1) zur Befestigung des Motors am Pylon, wobei das Befestigungssystem insbesondere vordere Befestigungen (10) und hintere Befestigungen (11) bezogen auf die Längsachse X des Motors gemäß einem orthonormierten Bezugssystem XYZ aufweist, die in Ebenen YZ lotrecht zur Achse X enthalten sind, wobei mindestens zwei vordere (10) oder hintere (11) Befestigungen von der Art mit Schwingungsdämpfung sind, wobei die zwei Befestigungen identisch und zu beiden Seiten des Pylons und des Motors angeordnet sind;
**dadurch gekennzeichnet, dass** jede Befestigung mit Schwingungsdämpfung enthält:
■ eine Aufhängungseinheit (12) mit elastischem Element (14) und mit Resonanzmasse (15), die mit dem Pylon um eine zur Achse X parallele Gelenkachse (20) verbunden ist und deren eines Ende (21) frei ist und die Masse trägt, während das andere Ende (18) dem mit dem Pylon verbundenen elastischen Element (14) zugeordnet ist; und
■ mindestens eine Lasche (16), deren eines Ende am Motor (2) befestigt und deren anderes Ende mit der entsprechenden Aufhängungseinheit (12) verbunden ist.

2. Einheit nach Anspruch 1, **dadurch gekennzeichnet, dass** die zwei Laschen (16) der Befestigungen in zur Achse Y in etwa parallelen Richtungen und symmetrisch bezüglich der Achse X angeordnet sind und dass eine dritte starre Befestigung (10, 11) zwischen dem Pylon (3) und dem Motor (2) vorgesehen ist und eine Lasche (36) aufweist, die an dieser angelenkt und in einer zur Achse Z in etwa parallelen Richtung angeordnet ist.

3. Einheit nach Anspruch 2, **dadurch gekennzeichnet, dass** die drei Befestigungen vordere Befestigungen (10) des Motors am Pylon sind.

4. Einheit nach Anspruch 2, **dadurch gekennzeichnet, dass** die drei Befestigungen hintere Befestigungen (11) des Motors am Pylon sind.

5. Einheit nach einem der Ansprüche 1 bis 4, **dadurch gekennzeichnet, dass** jede Aufhängungseinheit (12) in Form eines Arms (17) vorliegt, der gemäß dem Umfang des Motors gebogen ist und an seinen Enden das elastische Element (14) und die Resonanzmasse (15) trägt, während sich die Gelenkachse (20) des Arms am Pylon auf der Seite des elastischen Elements befindet.

6. Einheit nach einem der Ansprüche 1 bis 5, **dadurch gekennzeichnet, dass** die Laschen (16) mit dem Motor und den Einheiten über Gelenkachsen (30, 31) verbunden sind, wobei letztere und die Gelenkachse (20) jeder Einheit (12) an dem Pylon (3) parallel sind und die Laschen und die Einheiten (12) mit elastischen Lagern (35) aus Elastomermaterial oder ähnlichem versehen sind.

7. Einheit nach einem der Ansprüche 1 bis 6, **dadurch gekennzeichnet, dass** das elastische Element (14) jeder Aufhängungseinheit (12) aus mindestens einer Feder (23) besteht, die an dem Pylon und der Einheit durch Trägerplatten (25) angesetzt ist, die seitlich entlang der Feder angeordnet sind und entsprechende Windungsteile (24) von dieser aufnehmen.

8. Einheit nach einem der Ansprüche 1 bis 7, **dadurch gekennzeichnet, dass** die Resonanzmasse (15) in Form einer Massenrolle (26) vorliegt, die an einer Achse (27) am Ende des freien Endes (21) jeder Einheit montiert ist.

9. Einheit nach einem der Ansprüche 1 bis 8, **dadurch gekennzeichnet, dass** zwischen den zwei Laschen der Befestigungen mit Schwingungsdämpfung und den Aufhängungseinheiten Umlenkstangen (34) vorgesehen sind, die an die Laschen und die Aufhängungseinheiten angelenkt sind.

10. Einheit nach einem der Ansprüche 1 - 2, **dadurch gekennzeichnet, dass** eine dritte Befestigung (10) mit Schwingungsdämpfung gleich den zwei anderen Befestigungen zwischen dem Pylon (3) und dem Motor (2) so vorgesehen ist, dass die drei Befestigungen um den Motor verteilt und einerseits mit diesem und andererseits mit einem kreisförmigen Bügel (51) verbunden sind, der den Motor umgibt und am Pylon befestigt ist.

## Claims

1. Assembly comprising an aircraft engine (2), a pylon (3) for mounting an aircraft structure and an attaching system, said attaching system comprising, more specifically, front trunnions (10) and rear trunnions (11) with respect to the longitudinal axis X of said engine according to an orthonormal reference point XYZ, and contained in planes YZ perpendicular to said axis X, at least said two front (10) or rear (11) trunnions being of the vibrational damping type, said two trunnions being identical and arranged on either sides of said pylon and said engine,
**characterized in that** each vibrational damping trunnion comprises:
■ a suspension assembly (12) with elastic element (14) and resonant mass (15), being connected to said pylon around a jointing axis (20) parallel to the axis X and one end (21) of which is free and bears said mass, whereas the other end (18) is associated with said elastic element (14) connected to said pylon; and
■ at least one shackle (16) having an end attached to said engine (2) and the other end of which is connected to said corresponding suspension assembly (12).

2. The assembly according to claim 1,
**characterized in that** the two shackles (16) of said trunnions are arranged approximately according to directions parallel to the axis Y and symetrical with respect to the axis X and **in that** a third rigid trunnion (10, 11) is provided between said pylon (3) and said engine (2) and comprises a shackle (36) jointed to the latter and approximately arranged according to a direction parallel to the axis Z.

3. The assembly according to claim 2,
**characterized in that** the said three trunnions are front trunnions (10) of said engine on said pylon.

4. The assembly according to claim 2,
**characterized in that** the said three trunnions are rear trunnions (11) of said engine on said pylon.

5. The assembly according to any of claims 1 to 4,
**characterized in that** each suspension assembly (12) has the shape of a bent arm (17) according to the periphery of said engine and bearing, at its ends, said elastic element (14) and said resonant mass (15), whereas said jointing axis (20) of said arm to said pylon is locate on the side of said elastic element.

6. The assembly according to any of claims 1 to 5,
**characterized in that** said parallel jointing axes (20, 30, 31) between said assemblies (12) and said pylon (3), said shackles (16) and said engine (2), and said shackles and said assemblies (12) are provided with flexible bearings (35) made of an elastomeric material or similar.

7. The assembly according to any of claims 1 to 6,
**characterized in that** said elastic element (14) of each suspension assembly (12) comprises at least one spring (23) arranged on said pylon and on said assembly by respective supporting plates (25) arranged laterally along said spring and integrating corresponding spire portions (24) of the latter.

8. The assembly according to any of claims 1 to 7,
**characterized in that** said resonant mass (15) has the shape of a mass roller (26) mounted on an axis (27) at the end of said free end (21) of each assembly.

9. The assembly according to any of claims 1 to 8,
**characterized in that**, between the two shackles of said vibrational damping trunnions and said suspension assemblies, respective return small rods (34) are provided, jointed to said shackles and suspension assemblies.

10. The assembly according to any of claims 1-2,
**characterized in that** a third vibrational damping trunnion (10) identical to the two other trunnions, is provided between said pylon (3) and said engine (2) so that said three trunnions are distributed around said engine being connected on the one hand to the latter and, on the other hand, to a circular craddle (51) surrounding said engine and attached to said pylon.
